(19) Europäisches Patentamt
European Patent Office
Office européen des brevets

(11) **EP 2 577 839 B1**

(12) **EUROPÄISCHE PATENTSCHRIFT**

(45) Veröffentlichungstag und Bekanntmachung des Hinweises auf die Patenterteilung:
**21.03.2018   Patentblatt 2018/12**

(21) Anmeldenummer: **11723406.2**

(22) Anmeldetag: **20.05.2011**

(51) Int Cl.:
*H02J 7/02* *(2016.01)*      *H02J 7/00* *(2006.01)*
*H02J 15/00* *(2006.01)*

(86) Internationale Anmeldenummer:
**PCT/EP2011/058266**

(87) Internationale Veröffentlichungsnummer:
**WO 2011/147751 (01.12.2011 Gazette 2011/48)**

(54) **SYMMETRIEREINRICHTUNG, ENERGIESPEICHER UND SYMMETRIERVERFAHREN**

BALANCING UNIT, ENERGY STORE AND BALANCING METHOD

DISPOSITIF SYMÉTRISEUR, ACCUMULATEUR D'ÉNERGIE ET PROCÉDÉ DE SYMÉTRISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.05.2010   DE 102010029460**

(43) Veröffentlichungstag der Anmeldung:
**10.04.2013   Patentblatt 2013/15**

(73) Patentinhaber: **Siemens Aktiengesellschaft
80333 München (DE)**

(72) Erfinder:
• **MEINERT, Michael
91056 Erlangen (DE)**
• **PEPPEL, Torsten
14641 Wustermark (DE)**
• **RECHENBERG, Karsten
91077 Dormitz (DE)**
• **HARTMANN, Matthias
01219 Dresden (DE)**
• **MÜLLER, Frank
01277 Dresden (DE)**
• **RASTOGI, Armin
91469 Hagenbüchach (DE)**

(56) Entgegenhaltungen:
WO-A2-2009/051414      WO-A2-2009/051415
US-A1- 2005 140 336      US-A1- 2009 278 489

• KUTKUT N H ET AL: "Dynamic equalization techniques for series battery stacks", TELECOMMUNICATIONS ENERGY CONFERENCE, 1996. INTELEC '96., 18TH INTERNA TIONAL BOSTON, MA, USA 6-10 OCT. 1996, NEW YORK, NY, USA,IEEE, US, 6. Oktober 1996 (1996-10-06), Seiten 514-521, XP010204362, DOI: 10.1109/INTLEC.1996.573384 ISBN: 978-0-7803-3507-3

EP 2 577 839 B1

**Beschreibung**

Die vorliegende Erfindung betrifft eine Symmetriereinrichtung für in Serie miteinander verbundene Energiezellen. Ferner betrifft die Erfindung einen mehrere Energiezellen umfassenden Energiespeicher und ein Symmetrierverfahren für in Serie miteinander verbundene Energiezellen.

Zum Speichern elektrischer Energie wird üblicherweise eine Anzahl miteinander in Serie verbundener Energiezellen, etwa Kondensatoren oder Akkumulatoren, verwendet. Beispielsweise kann ein elektrisch angetriebenes Fahrzeug, wie eine Straßenbahn, kinetische Energie mittels des Antriebsmotors in elektrische Energie umwandeln und diese elektrische Energie in Doppelschichtkondensatoren zwischenspeichern, um sie zu einem späteren Zeitpunkt zum Beschleunigen mittels des elektrischen Antriebsmotors zu verwenden. Diese auch Rekuperation genannte Technologie kann ebenfalls verwendet werden, um etwa an einem Kran oder Aufzug eine Umwandlung zwischen potenzieller Energie und elektrischer Energie durchzuführen. Auch Energiezellen zum Wandeln von Energie, beispielsweise photoelektrische Zellen zur Wandlung von Strahlungsenergie in elektrische Energie, werden in Serie miteinander verschaltet.

Bei solchen Serienschaltungen können die elektrischen Charakteristika der einzelnen Energiezellen, wie Spannung, elektrischer Innenwiderstand und Kapazität, aufgrund von Fertigungsunterschieden, Alterungseffekten und unterschiedlichen äußeren Einflüssen, wie beispielsweise einer Temperatur, voneinander abweichen. Eine Gesamtleistung der Serienschaltung wird von diesen Unterschieden negativ beeinflusst.

Um eine gleichmäßige Auslastung der einzelnen Energiezellen zu erreichen, sind unterschiedliche Symmetriereinrichtungen bekannt, um die Spannungen der Energiezellen aneinander angleichen. Passive Symmetriereinrichtungen arbeiten häufig auf der Basis von Widerstandsschaltungen. Bekannte aktive Symmetriereinrichtungen verwenden zuschaltbare Widerstände, die auf der Basis individueller Spannungen der Energiezellen zu- oder abgeschaltet werden.

WO 2009/051414 A2 schlägt vor, eine Kaskade von Gleichstromstellern an einer Anzahl in Serie miteinander verbundener Energiezellen vorzusehen, um eine Symmetrierung durch Umladung zu bewirken.

In DE 10 2005 034 588 A1 wird ein Energiespeicher mit mehreren Energiezellen gezeigt, bei dem Energie aus einer Energiezelle, deren Spannung einen vorbestimmten Schwellenwert übersteigt, entnommen wird.

Der Erfindung liegt die Aufgabe zugrunde, eine effiziente Symmetriereinrichtung, einen effizienten Energiespeicher und ein effizientes Symmetrierverfahren für seriell miteinander verschaltete Energiezellen bereitzustellen.

Die Aufgabe wird durch eine Symmetriereinrichtung mit den Merkmalen des Anspruchs 1, einen Energiespeicher mit den Merkmalen des Anspruchs 11 und durch ein Symmetrierverfahren mit den Merkmalen des Anspruchs 12 gelöst. Unteransprüche geben bevorzugte Ausführungsformen wieder.

Offenbarung der Erfindung

Die vorliegende Erfindung ist eine Verfeinerung der unter dem Aktenzeichen 10 2010 029 460 beim Deutschen Patentamt angemeldeten Erfindung, deren Priorität beansprucht wird. Die Ausführungen der genannten Anmeldung liegen auch dieser Anmeldung zu Grunde und gelten in entsprechender Weise, falls im Folgenden nicht anders vermerkt.

Nach einem ersten Aspekt umfasst eine erfindungsgemäße Symmetriereinrichtung gemäß Anspruch 1 für eine erste und eine zweite elektrische Energiezelle einen Gleichstromsteller mit einer Induktivität, wobei der Gleichstromsteller dazu eingerichtet ist, in einem ersten Schaltzustand Energie aus der ersten Energiezelle in die Induktivität aufzunehmen und in einem zweiten Schaltzustand die aufgenommene Energie aus der Induktivität an die zweite Energiezelle abzugeben. Die Symmetriereinrichtung umfasst ferner eine Messseinrichtung zum Bestimmen der Spannungen der Energiezellen und eine Ansteuereinrichtung zur Ansteuerung des Gleichstromstellers in die beiden Schaltzustände in Abhängigkeit der bestimmten Spannungen, wobei die Messseinrichtung dazu eingerichtet ist, die Spannungen der Energiezellen auf der Basis eines magnetischen Feldes der Induktivität zu bestimmen. Die Ansteuereinrichtung ist weiterhin dazu eingerichtet, eine Spannungsbestimmung einer der Energiezellen mittels einer kurzen Ansteuerung und eine Energieübertragung mittels einer langen Ansteuerung eines der Schaltzustände zu ermöglichen. Dadurch kann die Bestimmung der Spannungen von der Energieübertragung unabhängig sein, wobei für beide Aufgaben dieselben Bauelemente verwendet werden. Eine gegenseitige Beeinflussung der beiden Vorgänge kann somit kostengünstig und auf einfache Weise vermieden werden.

Im Gegensatz zu Symmetriereinrichtungen, die auf Widerstandsnetzwerken basieren, kann durch den Gleichstromsteller ein Großteil der Energie, die der ersten Energiezelle entnommen wird, in die zweite Energiezelle eingespeist werden. Der Ausgleich zwischen den Zellen findet somit durch Aufladen einer schwachen Energiezelle aus einer starken Energiezelle statt durch Zuschalten einer unproduktiven Last an die starke Energiezelle statt. So kann eine etwa in Wärme umgesetzte "Abfall"-Energiemenge reduziert werden, wodurch die Effizienz der Energiezellen als Energiespeicher gesteigert und eine thermische Verlustleistung reduziert sein können. Aufgrund der individuellen Bestimmung der Spannungen der einzelnen Energiezellen kann der Energieausgleich zwischen den Energiezellen individuell gesteuert werden. Durch die magnetische Kopplung kann eine hohe Präzision bei der Bestimmung der Spannungen erzielt werden, die mit anderen Methoden, beispielsweise einem Messverstärker, nicht oder nur mit hohem Aufwand erreicht werden können.

Bevorzugter Weise umfasst die Messeinrichtung eine magnetisch mit der Induktivität gekoppelte Messinduktivität. Mittels der Messinduktivität können die Spannungen der Energiezellen genau und mit zu vernachlässigenden Rückwirkungen bestimmbar sein.

Es kann eine Vielzahl Energiezellen vorgesehen sein, die paarweise als erste und zweite Energiezellen mit zugeordneten Gleichstromstellern beschaltet sind, wobei die Induktivitäten der Gleichstromsteller magnetisch miteinander gekoppelt sind, um eine Energieübertragung zwischen den ersten Energiezellen und den zweiten Energiezellen zu ermöglichen.

Energie kann vorteilhafterweise von einer oder mehreren der ersten Zellen in die Induktivität geleitet werden, wonach die Energie an eine oder mehrere der zweiten Energiezellen abgegeben werden kann. Weisen die zweiten Energiezellen unterschiedliche Spannungen auf, so wird automatisch diejenige der zweiten Energiezellen am stärksten aufgeladen, welche die geringste Spannung trägt. Dadurch kann mit geringem schaltungstechnischem Aufwand eine besonders effiziente Symmetrierung erzielbar sein.

Es kann eine Vielzahl Energiezellen in Serie miteinander verbunden sei, wobei jeder Energiezelle ein Gleichstromsteller zugeordnet ist und zur Bereitstellung von Ansteuerenergie eines der Gleichstromsteller ein Hilfsspeicher vorgesehen ist, der aus den Energiezellen aufladbar ist.

Durch den Hilfsspeicher kann Ansteuerenergie auf einfache und effiziente Weise auch für den Gleichstromsteller bereitgestellt werden, dessen zugeordnete Energiezelle nur eine Nachbarzelle hat, deren Spannung zur Ansteuerung verwendbar ist.

In einer bevorzugten Ausführungsform ist der Hilfsspeicher mittels eines zugeordneten Gleichstromstellers aus einer Serienschaltung mehrerer der Energiezellen aufladbar. Dadurch kann der Hilfsspeicher auf die erforderliche Spannung aufgeladen werden, ohne eine komplexe Schaltung zu erfordern. Die zur Ansteuerung benötigte Energie kann im Vergleich zur Kapazität der Energiezellen gering sein, so dass durch die Aufladung des Hilfsspeichers keine nennenswerte Asymmetrie zwischen den Energiezellen entstehen kann.

Der Gleichstromsteller kann ein Hochsetzsteller sein, der einen gesteuerten Schalter zum selektiven Verbinden der ersten Energiezelle mit der Induktivität sowie eine von der Induktivität und dem Schalter zur zweiten Energiezelle führende Diode umfassen. Die Spannungsmessung kann erfolgen, während der Schalter geschlossen ist, und der Energietransport kann erfolgen, während der Schalter geöffnet ist. Der gesteuerte Schalter ist vorzugsweise ein Transistor, beispielsweise ein Feldeffekttransistor. Der Gleichstromsteller kann auch ein invertierender Hochsetzsteller sein, um eine Energieverschiebung in Richtung niedrigerer Spannung zu ermöglichen. In beiden Fällen kann der Gleichstromsteller als Durchflusswandler arbeiten.

Alternativ dazu kann der Gleichstromsteller ein Tiefsetzsteller sein, der einen gesteuerten Schalter zum selektiven Verbinden der ersten Energiezelle mit einer Diode sowie eine von der Diode und dem Schalter zur zweiten Energiezelle führende Induktivität umfassen. Sowohl die Spannungsmessung als auch der Energietransport können erfolgen, während der Schalter geschlossen ist. Die Messschaltung arbeitet dabei als Durchflusswandler.

Nach einem zweiten Aspekt umfasste ein erfindungsgemäßer Energiespeicher mehrere miteinander in Serie verbundene Energiezellen und die beschriebene Symmetrieeinrichtung zum Symmetrieren der Energiezellen. Dadurch kann ein leistungsfähiger Energiespeicher bereitgestellt werden, dessen Energiezellen auch bei leicht voneinander abweichenden elektrischen Charakteristika effizient ausgenutzt werden können. Ein Leistungsgewicht des Energiespeichers kann dadurch verbessert sein.

Nach einem dritten Aspekt umfasst ein Symmetrierverfahren für eine erste und eine zweite elektrische Energiezelle mit einem Gleichstromsteller mit einer Induktivität, wobei der Gleichstromsteller dazu eingerichtet ist, in einem ersten Schaltzustand Energie aus der ersten Energiezelle in die Induktivität aufzunehmen und in einem zweiten Schaltzustand die aufgenommene Energie aus der Induktivität an die zweite Energiezelle abzugeben, Schritte des kurzen Ansteuerns des Gleichstromstellers, des Bestimmens der Spannungen der Energiezellen auf der Basis eines magnetischen Feldes der Induktivität und des langen Ansteuerns des Gleichstromstellers in Abhängigkeit der bestimmten Spannungen, um Energie von der ersten Energiezelle in die zweite Energiezelle zu transportieren.

Das Verfahren kann eine rasche und effiziente Symmetrierung der Energiezellen bewirken. Aufgrund der kurzen Sequenz einfacher Arbeitschritte kann das Verfahren vorteilhaft schaltungstechnisch und/oder mittels einer einfachen programmierbaren Steuerung implementierbar sein.

In einer bevorzugten Ausführungsform wird der Gleichstromsteller zum Bestimmen der Spannungen so kurz angesteuert, dass die Induktivität zusammen mit einer magnetisch gekoppelten Messinduktivität als Transformator wirkt. Ein Übertragungsverlust des solchermaßen gebildeten Transformators kann vernachlässigbar klein sein. Eine ungewollte Energieübertragung bzw. Energieentnahme aus einer der Energiezellen kann somit vermieden werden.

Zum Transportieren von Energie kann der Gleichstromsteller so lange angesteuert werden, dass die Energie zeitweise in der Induktivität gespeichert wird. Dadurch kann die Energieübertragung von der Spannungsbestimmung nur durch die zeitliche Länge der Ansteuerung unterschieden werden, wodurch das Verfahren einfach und robust implementierbar sein kann.

Nach einem vierten Aspekt betrifft die Erfindung ein Computerprogrammprodukt mit Programmcodemitteln zur Durchführung des Verfahrens, wenn es auf einer Ausführungseinrichtung abläuft. Insbesondere kann das Verfahren auf einem Mikrocomputer ablaufen. Alternativ dazu kann das Computerprogrammprodukt auch auf einem computerlesbaren Medium gespeichert sein, so dass es zwischen unterschiedlichen Mikrocomputern austauschbar ist.

Kurze Beschreibung der Zeichnungen

Die Erfindung wird nun mit Bezug auf die beigefügten Zeichnungen genauer beschrieben, in denen

FIG 1     einen Hochsetzsteller;
FIG 2     einen Tiefsetzsteller;
FIG 3     eine Symmetriereinrichtung;
FIG 4     eine Beschaltung eines Übertragers in der Symmetriereinrichtung von FIG 3;
FIG 5     eine weitere Beschaltung eines Übertragers in der Symmetriereinrichtung von FIG 3;
FIG 6     einen Energiespeicher mit einer Symmetriereinrichtung;
FIG 7     noch einen weiteren Energiespeicher mit einer Symmetriereinrichtung und
FIG 8     ein Ablaufdiagramm eines Symmetrierverfahrens für die Symmetriereinrichtung aus FIG 3,6 bzw. 7

darstellt.

Genaue Beschreibung von Ausführungsbeispielen

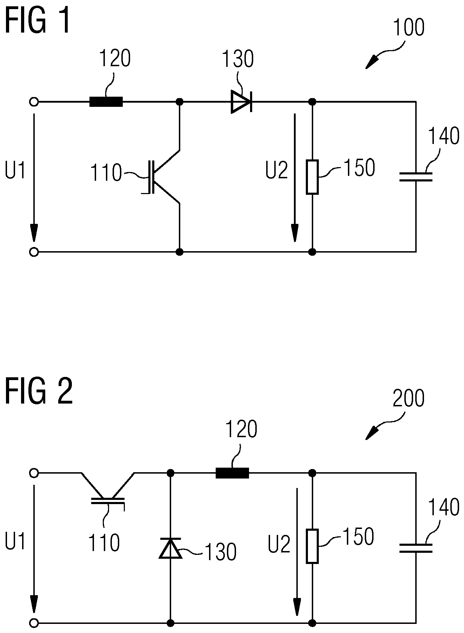

FIG 1 zeigt einen Hochsetzsteller 100. Der Hochsetzsteller 100 verwandelt eine Eingangsgleichspannung U1 in eine höhere Ausgangsgleichspannung U2. Andere Bezeichnungen für den Hochsetzsteller 100 sind Aufwärtsregler, Boost-Converter und Step-up-Converter. Der Hochsetzsteller 100 gehört zur Gruppe der Gleichstromsteller (alias DC-DC-Wandler oder Chopper).

Der Hochsetzsteller 100 umfasst einen Transistor 110, eine Induktivität 120 und eine Diode 130. Ferner sind eine optionale Kapazität 140 und ein Widerstand 150 eingetragen, der einen Verbraucher der Ausgangsgleichspannung U2 darstellt. Nicht dargestellt ist ein Steuereingang des Transistors 110, über den der Transistor 110 in einen leitenden oder einen nichtleitenden Zustand versetzt werden kann.

Der Transistor 110 wird als Schalter verwendet und kann beispielsweise ein bipolarer Transistor, ein FET, MOSFET, IGBT, GTO oder ein anderer Halbleiter sein, der an einer Gleichspannung zwischen einem leitenden und einem nichtleitenden Zustand gesteuert werden kann. Die Kapazität 140 dient zum Glätten der Ausgangsgleichspannung U2. Je nach Anwendung kann die Ausgangsspannung U2 noch weiter geregelt und/oder gesiebt werden, um an die Anforderungen eines Verbrauchers angepasst zu werden.

Der Transistor 110 wird an seinem Steuereingang mit einem periodischen Rechtecksignal angesteuert, wobei jede Taktperiode T einen Anteil $T_{aus}$, während dem der Transistor 110 nicht leitet, und einem Anteil $T_{ein}$, während dem der Transistor 110 leitet, umfasst. Bei kontinuierlichem Stromfluss ohne Stromlücken gilt für den Hochsetzsteller 100:

$$U2 = \frac{T}{t_{aus}} U1 \qquad\qquad \text{(Gleichung 1)}$$

FIG 2 zeigt einen Tiefsetzsteller 200. Der Tiefsetzsteller 200 ist aus den gleichen Elementen 110 bis 150 wie der Hochsetzsteller 100 aufgebaut und dient dazu, die Eingangsgleichspannung U1 in eine niedrigere Ausgangsgleichspannung U2 umzuwandeln. Andere Bezeichnungen für den Tiefsetzsteller 200 sind Eimer-Umsetzer, Buck-Converter, Abwärtswandler, Step-Down-Converter. Der Tiefsetzsteller 200 gehört ebenfalls zur Gruppe der Gleichstromsteller. Bei kontinuierlichem Stromfluss ohne Stromlücken gilt für die Ausgangsspannung:

$$U2 = \frac{t_{ein}}{T} U1 \qquad\qquad \text{(Gleichung 2)}$$

Der Hochsetzsteller 100 und der Tiefsetzsteller 200 können erfindungsgemäß dazu verwendet werden, elektrische Energie von einer Energiezelle in eine andere Energiezelle umzutransportieren. Dabei kann in äquivalenter Weise der Hochsetzsteller 100 oder der Tiefsetzsteller 200 eingesetzt werden. In jedem Fall wird der Gleichspannungswandler 100, 200 dazu verwendet, Energie von einer Energiezelle mit einer höheren Spannung in eine benachbarte Energiezelle mit einer niedrigeren Spannung zu transportieren.

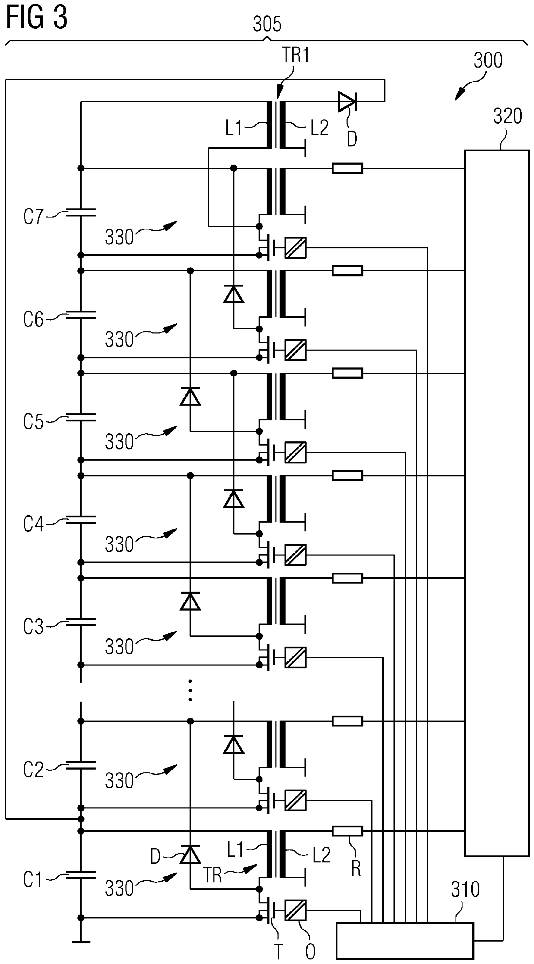

FIG 3 zeigt eine Symmetriereinrichtung 300. Im linken Bereich von FIG 3 ist eine Anzahl Energiezellen C1 bis C7 dargestellt, die in Serie miteinander verbunden sind. Die Symmetriereinrichtung 300 bildet zusammen mit den Energiezellen C1 bis C7 einen Energiespeicher 305. Die Energiezellen C1 bis C7 können Akkumulatoren oder Kondensatoren umfassen. Der Fußpunkt der untersten Energiezelle C1 liegt an Masse. Wie durch die Punkte zwischen C2 und C3 angedeutet ist, kann eine beliebige Vielzahl von Energiezellen verwendet werden; eine sinnvolle Untergrenze liegt bei zwei Energiezellen C1 und C2. Die Energiezellen C1 bis C7 liefern jeweils eine Gleichspannung ungefähr gleicher Höhe und können beispielsweise Kondensatoren umfassen, insbesondere Doppelschichtkondensatoren mit bis zu mehreren 1000 Farad Kapazität, oder auch Akkumulatoren, beispielsweise Lithium-Ionen-Akkumulatoren. In einer weiteren Ausführungsform können die Energiezellen C1 bis C7, beispielsweise in Form von photoelektrischen Zellen, auch selbst Energie umwandeln und elektrische Energie bereitstellen.

Die Symmetriereinrichtung 300 umfasst eine Steuerung 310, die als Mikrocomputer ausgebildet sein kann, eine Messeinrichtung 320 und eine Anzahl Gleichspannungswandler 330, wobei Gleichspannungswandler 330 und Energiezellen C1 bis C7 einander paarweise zugeordnet sind. Jeder Gleichspannungswandler 330 umfasst einen Transistor T, eine Diode D, einen Übertrager TR mit Induktivitäten L1 und L2, sowie einen Messwiderstand R. Über die Gleichspannungswandler 330 hinaus umfasst die Symmetriereinrichtung 300 einen weiteren Übertrager TR1 mit Induktivitäten L1 und L2 sowie eine weitere Diode D.

Die Gleichspannungswandler 330 sind als Hochsetzsteller entsprechend dem Hochsetzsteller 100 in FIG 1 ausgebildet, wobei ein Energietransport zwischen den Energiezellen von unten nach oben verläuft. In einer alternativen Ausführungsform können auch Tiefsetzsteller 200 nach FIG 2 verwendet werden, wobei der Energietransport von oben nach unten verläuft. Steuersignale für den Hochsetzsteller 100 bzw. den Tiefsetzsteller 200 müssten in entsprechender Weise angepasst werden.

Zwischen einem oberen und einem unteren Anschluss der Energiezelle C1 sind die Induktivität L1 des Übertragers TR und der Transistor T in Serie miteinander verbunden. Von einem Anschlusspunkt der Induktivität L1 mit dem Transistor T führt die Diode D in Durchlassrichtung zum oberen Anschluss der Energiezelle C2. Die Induktivität L1 ist im Übertrager TR magnetisch mit der Induktivität L2 gekoppelt, vorzugsweise durch einen Übertragerkern. Ein Anschluss der zweiten Induktivität L2 liegt am unteren Anschluss von C1. Der andere Anschluss der Induktivität L2 ist über den Widerstand R zur Messeinrichtung 320 geführt, die auch über Widerstände R mit den anderen Gleichspannungswandlern 330 verbunden ist.

Die Messeinrichtung 320 stellt der Steuerung 310 ein Messsignal bereit, das auf eine bestimmte Spannung einer der Energiezellen C1-C7 hinweist. Die Messeinrichtung 320 kann insbesondere durch einen Analog-Digital-Wandler mit mehreren analogen Eingängen implementiert sein. Mittels des Optokopplers O ist ein Steuereingang des Transistors T jedes Gleichspannungswandlers 330 mit der Steuerung 310 verbunden. Wird der Transistor T von der Steuerung 310 mittels des Optokopplers O angesteuert, so wird er niederohmig und die erste Induktivität L1 liegt parallel zur Energiezelle C1. Der Optokoppler O dient der Potenzialtrennung des Gleichspannungswandlers 330 von der Steuerung 310. In anderen Ausführungsformen kann auch ein Übertrager oder eine andere Vorrichtung zur Potenzialtrennung verwendet werden; gegebenenfalls kann der Optokoppler O auch entfallen.

Um eine Messung der Spannung der Energiezelle C1 durchzuführen, gibt die Steuerung 310 einen kurzen Impuls an den Optokoppler O aus, während dem der Transistor T durchsteuert, so dass die Induktivität L1 parallel zur Energiezelle C1 liegt. Im Bereich der Induktivität L1 wird dadurch ein magnetisches Feld auf- und bei Ende des Impulses wieder abgebaut, wobei die maximale Stärke des magnetischen Feldes von der Spannung der Energiezelle C1 abhängig ist. Durch die rasche Änderung des magnetischen Feldes wird in der Induktivität L2 eine zur maximalen Stärke des Magnetfeldes proportionale Spannung induziert. Diese Spannung wird von der Messeinrichtung 320 abgetastet und der Steuerung 310 bereitgestellt. Durch sequenzielles Ausgeben entsprechender Impulse an die Gleichspannungswandler 330 können die Spannungen aller Energiezellen C1 bis C7 nacheinander abgetastet und die abgetasteten Messwerte der Steuerung 310 bereitgestellt werden.

Um elektrische Energie von der Energiezelle C1 in die Energiezelle C2 zu übertragen, legt die Steuerung 310 ein periodisches Signal, etwa ein Rechtecksignal, an den Optokoppler O, wobei das Tastverhältnis des Signals so gewählt ist, wie oben mit Bezug auf die Gleichungen 1 und 2 beschrieben ist.

Durch geeignete Wahl des Tastverhältnisses kann Energie auch dann aus der Energiezelle C1 in die Energiezelle C2 transportiert werden, wenn die Spannungen der Energiezellen C1 und C2 sehr ähnlich oder gleich sind. Üblicherweise wird der Gleichspannungswandler 330 von der Steuerung 310 derart angesteuert, dass sich möglichst rasch gleiche Spannungen an den Energiezellen C1 und C2 einstellen. Ein Energietransport von der Energiezelle C1 zur Energiezelle C2 erfolgt daher üblicherweise nur dann, wenn festgestellt wird, dass die Spannung der Energiezelle C1 größer als die Spannung der Energiezelle C2 ist, vorzugsweise um einen vorbestimmten Betrag.

In entsprechender Weise werden die weiteren Gleichspannungswandler 330 durch die Steuerung 310 angesteuert, einen Energieausgleich zwischen den zugeordneten Energiezellen und der jeweils oberen Nachbar-Energiezelle zu bewirken. Dabei bewirkt der Übertrager TR1 eine zyklische Verkettung der Energiezellen C7 und C1, d.h., dass der Gleichspannungswandler 330, der der Energiezelle C7 zugeordnet ist, mittels des Übertragers TR1 und der Diode D elektrische Energie in die Energiezelle C1 übertragen kann.

Um Energie zu sparen, kann während einer Ruhephase keiner der Gleichspannungswandler 330 durch die Steuerung 310 angesteuert werden, so dass eine Stromaufnahme der Symmetriereinrichtung 300 auf Sperrströme an den Transistoren T beschränkt ist.

Jeder der Gleichspannungswandler 330 hat einen bestimmten Wirkungsgrad von beispielsweise 80%. Energie, welche der Energiezelle C1 entnommen wird, kann nur zu 80% von der Energiezelle C2 aufgenommen werden, die restlichen 20% werden hauptsächlich in dem Gleichspannungswandler 330, der der Energiezelle C1 zugeordnet ist, in Wärme umgesetzt. Wird Energie schrittweise über mehrere Energiezellen C1-C7 transportiert, so kann in die Energiezelle C3 nur noch 64% der Energie eingebracht werden, die ursprünglich der Energiezelle C1 entnommen wurde. In der Energiezelle C4 sind es noch ca. 51%, während es in der Energiezelle C5 gerade noch 41% sind. Ein Aufladen beispielsweise der Energiezelle C5 in vier Schritten aus der Energiezelle C1 ist wenig wirtschaftlich, da in den Gleichspannungswandlern 330, die den Energiezellen C1 bis C4 zugeordnet sind, über die Hälfte der übertragenen Energie in Wärme umgesetzt wird. Dieser Effekt kann jedoch auch erwünscht sein, da im Gegensatz zu vielen bekannten Symmetriereinrichtungen die Umwandlung von elektrischer Energie in Wärme an den unterschiedlichen Gleichspannungswandlern 330 erfolgt und nicht an einem einzelnen Bauteil, so dass ein Abführen der verteilt anfallenden Abwärme erleichtert sein kann.

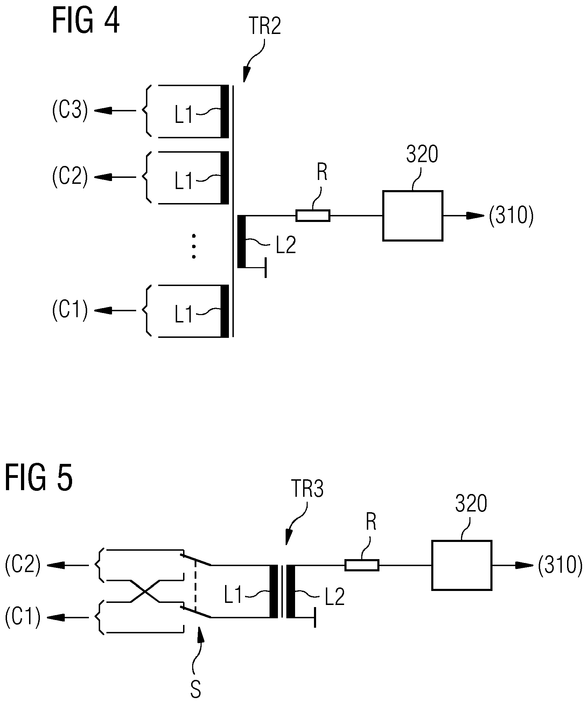

FIG 4 zeigt eine Beschaltung eines mehrfach genutzten Übertragers TR2 in der Symmetriereinrichtung 300 aus FIG 3. Der Übertrager TR2 ersetzt mehrere der Übertrager TR in FIG 3, indem er mehrere erste Induktivitäten L1 der Übertrager TR mit einer zweiten Induktivität L2 koppelt. In einer bevorzugten Ausführungsform ist der Übertrager TR2 aus Effizienzgründen auf einen Ringkern gewickelt. Es ist jedoch auch jede andere Form von Kern unter Verwendung üblicher Kernmaterialien, beispielsweise Weicheisen, Dynamoblech oder Mu-Metall, möglich. Die zweite Induktivität L2 ist wie in der Darstellung von FIG 3 mit der Steuerung 310 verbunden, wobei ein optionaler Widerstand R verwendet wird.

In FIG 4 sind lediglich drei Induktivitäten L1 dargestellt, die den Energiezellen C1 bis C3 zugeordnet sind; grundsätzlich können beliebig viele Induktivitäten L1 mittels des Übertragers TR2 mit der zweiten Induktivität L2 gekoppelt sein. Durch die Integration mehrerer Übertrager TR in einen Übertrager TR2 lassen sich nicht nur mehrere zweite Induktivitäten L2, sondern auch das Vorsehen von mehreren Eingängen an der Messeinrichtung 320 einsparen.

Um eine Messung der Spannungen der Energiezellen C1 bis C7 der Symmetriereinrichtung 300 aus FIG 3 durchzuführen, ist es bei Einsatz des Übertragers TR2 aus FIG 4 erforderlich, dass die Spannungen sequenziell bestimmt werden. Dazu steuert die Steuerung 310 die Optokoppler O der Gleichspannungswandler 330 nacheinander mit Impulsen an, so dass zu jedem Zeitpunkt nur eine der ersten Induktivitäten L1 zu der ihr zugeordneten Energiezelle C1 bis C7 parallel geschaltet ist.

FIG 5 zeigt eine Beschaltung eines Übertragers TR3 in der Symmetriereinrichtung 300 von FIG 3. Mittels eines Schalters S ist eine erste Induktivität L1 alternativ mit der ersten Energiezelle C1 oder der zweiten Energiezelle C2 verbindbar. Mit entsprechend vielen Umschaltpositionen bzw. Anschlüssen des Schalters S lässt sich das dargestellte Prinzip auf beliebig viele Energiezellen C1 bis C7 ausdehnen.

Die in FIG 5 dargestellte Schaltung erfordert es, dass sowohl eine Bestimmung der Spannungen der Energiezellen C1 bis C7, als auch der Transport von elektrischer Energie zwischen Energiezellen C1 bis C7 zu jedem Zeitpunkt nur an einer der Energiezellen C1 bis C7 durchgeführt wird. In einer weiteren Ausführungsform können mehrere Übertrager TR3 eingesetzt werden, die jeweils mit mehreren Energiezellen C1 bis C7 verbunden sind. Die Messeinrichtung 320 kann dann so viele Eingänge aufweisen, wie Übertrager TR3 vorgesehen sind. Eine Kombination der Beschaltungen der Figuren 4 und 5 ist möglich.

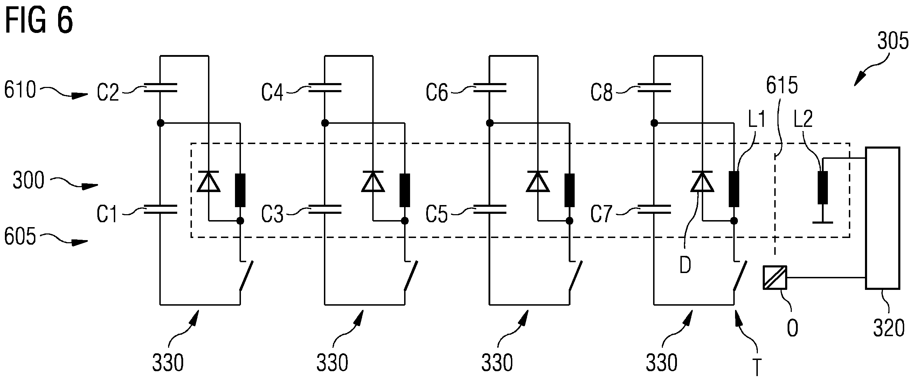

FIG 6 zeigt den Energiespeicher 305 aus Figur 3 in einer weiteren Ausführungsform.

Die Energiezellen C1 bis C7 sind in eine erste Gruppe 605 der ungeraden Energiezellen C1, C3, C5 und C7 und eine zweite Gruppe 610 der geraden Energiezellen C2, C4, C6 und C8 aufgeteilt. Die Energiezellen der ersten Gruppe 605 und der zweiten Gruppe 610 sind paarweise mittels eines Hochsetzstellers 330 verbunden, der die erste Induktivität L1, die Diode D und den Transistor T umfasst. Der Transistor T ist mittels des Optokopplers O durch die Messeinrichtung 320 ansteuerbar. Der Einfachheit halber ist nur ein Optokoppler O exemplarisch für alle Hochsetzsteller 330 eingezeichnet, obwohl jeder Hochsetzsteller 330 mittels eines zugeordneten Optokopplers O separat und unabhängig von den anderen Hochsetzsteller 330 steuerbar ist.

Die Darstellung des Energiespeichers 305 mit der Symmetrieeinrichtung 300 ist dahingehend unvollständig, als dass Verbindungen nicht eingezeichnet sind, die die paarweise verbundenen Energiezellen C1 bis C7 vollständig miteinander in Serie verschalten, also den oberen Anschluss von C2 mit dem unteren Anschluss von C3 und in entsprechender Weise C4 mit C5 sowie C6 mit C7. Außerdem sind den Energiespeichern der zweiten Gruppe 610 zugeordnete Hochsetzsteller 330 nicht eingezeichnet, die dazu eingerichtet sind, Energie aus den Energiezellen der zweiten Gruppe 610 aufnehmen und in die Energiezellen der ersten Gruppe 605 einzuleiten.

Die ersten Induktivitäten L1 aller Hochsetzsteller 330 und eine zweite Induktivität L2 sind magnetisch miteinander gekoppelt. Die Kopplung erfolgt vorzugsweise durch Wicklung der Induktivitäten L1 und L2 auf einem gemeinsamen Kern 615.

Durch ein kurzes Ansteuern eines Transistors T eines der Hochsetzsteller 330 wird die Spannung der zugeordneten Energiezelle der ersten Gruppe 605 an die erste Induktivität L1 gelegt, wodurch ein magnetisches Feld im Bereich der zweiten Induktivität L2 entsteht. An der zweiten Induktivität L2 kann daraufhin durch die Messeinrichtung 320 eine Spannung gemessen werden, die proportional zur Spannung der betreffenden Energiezelle der ersten Gruppe 605 ist. Ein Wicklungsverhältnis der Spulen L1 und L2 fließt in bekannter Weise als konstanter Faktor in das Messergebnis ein.

In der beschriebenen Weise kann die Messeinrichtung 320 nun die Transistoren T der restlichen Hochsetzsteller 330 jeweils kurz ansteuern, um die Spannungen der restlichen Energiezellen der ersten Gruppe 605 zu bestimmen.

Anschließend bestimmt die Messeinrichtung 320 diejenige Energiezelle der ersten Gruppe 605, die die höchste Spannung aufweist. Sodann steuert die Messeinrichtung 320 den dieser Energiezelle zugeordneten Transistor T lange an, sodass durch den durch die entsprechende Induktivität L1 fließenden Strom Energie von der entsprechenden Energiezelle der ersten Gruppe 605 in den Kern 615 eingetragen wird, der alle Spulen L1 und die Spule L2 magnetisch miteinander koppelt. In einer Ausführungsform können auch mehrere Transistoren T mehrerer Hochsetzsteller 330 gleichzeitig angesteuert werden, um ein Magnetfeld im Bereich des magnetischen Kerns 615 aufzubauen.

Wird anschließend die Ansteuerung des Transistors T beendet, so induziert das zusammenbrechende Magnetfeld in den Induktivitäten L1 und L2 entsprechende Ströme. Jede der ersten Induktivitäten L1 liegt über eine zugeordnete Diode D parallel zu einer Energiezelle der zweiten Gruppe 610. In Abhängigkeit einer Spannung jeder Energiezelle der zweiten Gruppe 610 fließt ein Strom durch die zugeordnete Diode D, sodass die entsprechende Energiezelle der zweiten Gruppe 610 aufgeladen wird. Dabei wird automatisch diejenige Energiezelle der zweiten Gruppe 610 am stärksten aufgeladen, welche zum Zeitpunkt des Öffnens des Transistors T die geringste Spannung aufweist.

Durch Wiederholen der beschriebenen Umladung von den Energiezellen der ersten Gruppe 605 in die Energiezellen der zweiten Gruppe 610 können die Energiezellen der zweiten Gruppe 610 Spannungen annehmen, die sich nur noch um Beträge unterscheiden, die den Serienstreuungen der Flussspannungen der Dioden D entsprechen.

Eine entsprechende Symmetrieeinrichtung 300 kann alternativ auf der Basis von Tiefsetzstellern 200 aus Figur 2 angegeben werden. Die solchermaßen variierte Schaltung wird in entsprechender Weise angesteuert, wobei Einschaltphasen und Ausschaltphasen der Transistoren T vertauscht sind, wie oben mit Bezug auf die Figuren 1 und 2 beschrieben ist. Eine beispielhafte Ansteuerzeit eines Transistors T zur Spannungsbestimmung beträgt 5 μs bei einer Frequenz von 1 kHz. Eine beispielhafte Ansteuerzeit zur Energieübertragung beträgt 50 μs bei einer Frequenz von 10 kHz. Die Ansteuerzeit zur Energieübertragung kann verändert werden, um die Menge der transportierten Energie zu variieren.

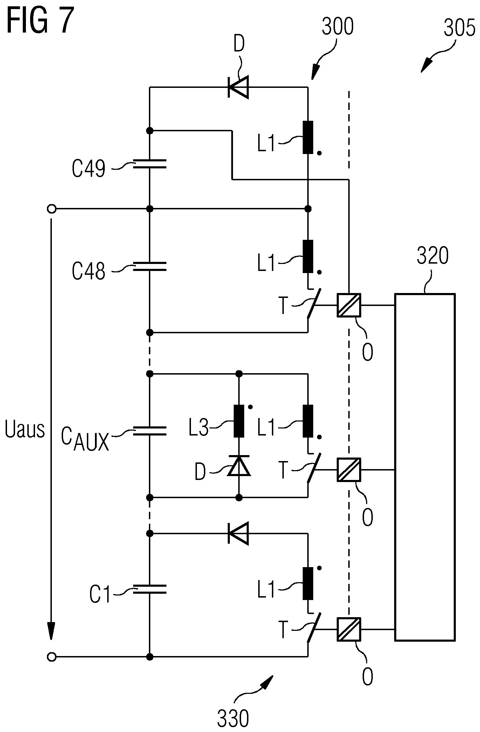

FIG 7 zeigt einen Ausschnitt eines Energiespeichers 305 mit einer Symmetrieeinrichtung 300 entsprechend Figuren 3 und 6 nach einem weiteren Ausführungsbeispiel. 48 Energiezellen C1 bis C48 sind in Serie miteinander verbunden und liefern in Summe eine Ausgangsspannung $U_{aus}$. Zum Ausgleich von Asymmetrien zwischen den Energiezellen C1 bis C48 ist die Symmetriereinrichtung 300 vorgesehen.

In Figur 7 ist der Setzsteller 330 im Bereich von C1 ein Sperrwandler ("flyback converter"). Alle dargestellten Induktivitäten L1 der Hochsetzsteller 330 und eine Induktivität L3 sind mittels eines gemeinsamen magnetischen Kerns magnetisch miteinander gekoppelt und bilden so einen Transformator.

Der Transistor T des Hochsetzstellers 330 an der Energiezelle C1 benötigt zur Ansteuerung ein Potential, das durch die zugeordnete Energiezelle C1 und die spannungsmäßig darüber liegende Energiezelle C2 bereitgestellt ist. In entsprechender Weise gilt dies auch für die nicht dargestellten Hochsetzsteller 330 der Energiezellen C2 bis C48. Um den Transistor T an der Energiezelle C48 ansteuern zu können, ist zur Bereitstellung des Ansteuerpotentials die Hilfszelle C49 vorgesehen.

Zum Aufladen der Hilfszelle C49 ist eine Unterstützungszelle $C_{aux}$ durch Serienschaltung von drei benachbarten physikalischen Energiezellen zwischen C1 und C48 gebildet, wobei beliebige drei benachbarte Energiezellen verwendet werden können.

Die Kapazität der Hilfszelle C49 ist so gewählt, dass die in der Hilfszelle C49 speicherbare Energie wenigstens zur Ansteuerung eines Hochsetzstellers 330 bzw. dessen Transistors T ausreicht. Während die Energiezellen C1 bis C48 in einem Ausführungsbeispiel Kapazitäten in der Größenordnung von ca. 3000 F (Farad) aufweisen können, beträgt die Kapazität der Hilfszelle C49 lediglich ca. 1000 μF.

Zum Betreiben der Symmetrieeinrichtung 300 wird in einer Abfolge dreier unterschiedlicher Modi verfahren. In einem ersten Modus, dem Messmodus, wird der Transistor T der Unterstützungszelle $C_{aux}$ mit einer kurzen Einschaltzeit von beispielsweise 5 μs bei einer Frequenz von 1 kHz angesteuert, wobei die Einschaltphase des Transistors T zur Energieübertragung von der Unterstützungszelle $C_{aux}$ in die Hilfszelle C49 genutzt wird. Der um die Induktivitäten L1 und den gemeinsamen Kern aufgebaute Transformator arbeitet somit als Durchflusswandler. Die übertragene Energie reicht aus, um die Hilfszelle C49 auf die Ansteuerenergie zu bringen, die für die Spannungsmessung der Energiezelle C48 erforderlich ist.

In einem zweiten Modus, dem Symmetriermodus für die Energiezelle C48, wird eine höhere Ansteuerenergie als im ersten Modus benötigt. Der Transistor T der Unterstützungszelle $C_{aux}$ wird mit einer längeren Ansteuerzeit von

beispielsweise 5 μs bei einer Betriebsfrequenz von 10 kHz angesteuert. Ansonsten gleicht die Funktionsweise der des ersten Modus. In entsprechender Weise können die anderen Energiezellen durch Ansteuerung der zugeordneten Transistoren symmetriert werden.

Um die erste Energiezelle C1 zu laden, wird ein dritter Modus, der Symmetriermodus der Energiezelle C1, aktiviert. Die Transistoren T, die der Energiezelle C1 und der Unterstützungszelle $C_{aux}$ zugeordnet sind, werden durchgesteuert, so dass Energie aus der Unterstützungszelle $C_{aux}$ im Kern, der die Induktivitäten L1 und L3 miteinander koppelt, magnetisch gespeichert wird. Wird der Transistor T, der der Unterstützungszelle $C_{aux}$ zugeordnet ist, anschließend geöffnet, fließt die im Kern gespeicherte Energie nicht in die Unterstützungszelle $C_{aux}$, sondern in die Energiezelle C1, da diese eine geringere Spannung aufweist als die aus mehreren Energiezellen gebildete Unterstützungszelle $C_{aux}$. Die Länge der Ein- und Ausschaltzeiten der Transistoren T richtet sich dabei nach den Spannungen der Unterstützungszelle $C_{aux}$ der Energiezelle C1.

Die dritte Induktivität L3 dient zur Entmagnetisierung in der Sperrphase der Transistoren T, wenn die in Figur 7 dargestellte Symmetrieeinrichtung 300 im ersten oder im zweiten Modus arbeitet.

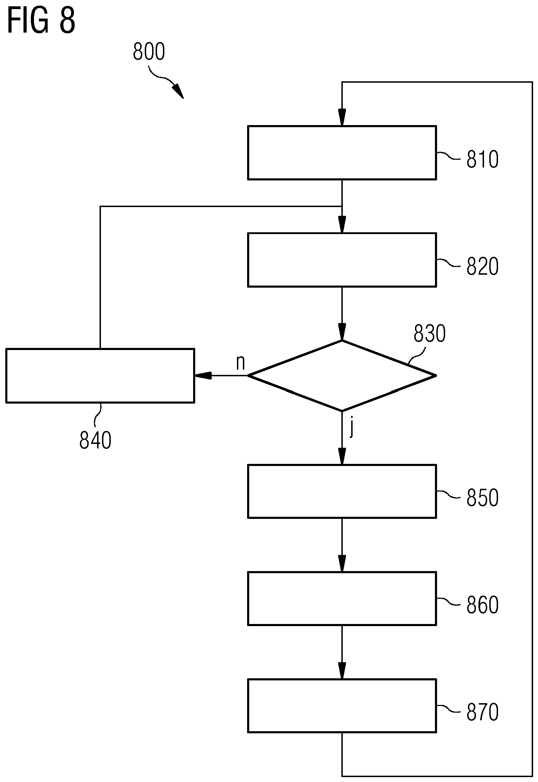

FIG 8 zeigt ein Ablaufdiagramm eines Symmetrierverfahrens 800 für die Symmetriereinrichtung 300 aus FIG 3 bzw. FIG 6. Unter Hinblick auf den kombinierten Übertrager TR2 von FIG 4 wird eine sequentielle Messung bzw. Energieübertragung durchgeführt.

In einem ersten Schritt 810 wird die erste Energiezelle C1 als aktuelle Energiezelle gesetzt. Danach wird in einem Schritt 820 ein Steuerimpuls an den Optokoppler O desjenigen Gleichspannungswandlers 330 ausgegeben, der der aktuellen Energiezelle zugeordnet ist. Dabei wird mittels der Messeinrichtung 320 an der zugeordneten Induktivität L2 eine Spannung bestimmt, auf deren Basis die Spannung der aktuellen Energiezelle bestimmt wird.

Danach wird in einem Schritt 830 überprüft, ob die aktuelle Energiezelle die letzte Energiezelle der Serienschaltung ist, in der Darstellung von FIG 3 also die Energiezelle C7. Ist dies nicht der Fall, so wird in einem Schritt 840 die aktuelle Energiezelle inkrementiert und das Verfahren 800 fährt mit dem Schritt 820 fort.

Im Fall der Symmetriereinrichtung 300 aus FIG 6 ist die Unterstützungszelle die letzte Energiezelle, die symmetriert wird. Zur Symmetrierung der ersten Energiezelle C1 kann wie oben mit Bezug auf den dritten Modus beschrieben ist verfahren werden.

Ist die aktuelle Energiezelle nicht die letzte Energiezelle der Serienschaltung, fährt das Verfahren 800 mit einem Schritt 850 fort, in dem die bestimmten Spannungen miteinander verglichen und Impulsverhältnisse zur Energieübertragung zwischen benachbarten Energiezellen C1 bis C7 bestimmt werden. Diese Impulsverhältnisse werden anschließend in einem Schritt 860 an die Optokoppler O ausgegeben. Der Schritt 860 wird während einer vorbestimmten Zeitdauer ausgeführt. Danach kann in einem optionalen Schritt 870 eine Pause eingelegt werden, in der keiner der Optokoppler O der Gleichspannungswandler 330 angesteuert wird.

Dadurch kann ein Energieverbrauch der Symmetriereinrichtung 300 minimiert werden. Außerdem kann es vorteilhaft sein, eine Pause einzufügen, um die Energiezellen C1 bis C7 zur Ruhe kommen zu lassen und nicht zu überlasten.

Danach kehrt das Verfahren 800 zum Schritt 810 zurück und kann erneut durchlaufen. Bei Einsatz individueller Übertrager TR nach FIG 3 können die zeitlichen Abfolgen der Spannungsbestimmung (Schritte 810 bis 840) und der Ausgabe von Steuerimpulsen nach Schritt 860 entsprechend den oben bezüglich Figur 3 bzw. 6 gemachten Ausführungen so abgewandelt werden, dass mehrere Spannungsbestimmungen und/oder mehrere Energietransporte (Schritt 860) gleichzeitig erfolgen. Bei Verwendung des Übertragers TR3 aus FIG 5 sind sequenzielle Spannungsbestimmungen (Schritte 810 bis 840) und sequentielle Energietransporte (Schritt 860) zu steuern, wobei der Schalter S in geeigneter Weise anzusteuern ist.

## Patentansprüche

1. Symmetriereinrichtung (300) für eine erste (C1) und eine zweite elektrische Energiezelle (C2), umfassend:

- einen Gleichstromsteller (330) mit einer Induktivität (L1), wobei der Gleichstromsteller (330) dazu eingerichtet ist, in einem ersten Schaltzustand Energie aus der ersten Energiezelle (C1) in die Induktivität (L1) aufzunehmen und in einem zweiten Schaltzustand die aufgenommene Energie aus der Induktivität (L1) an die zweite Energiezelle (C2) abzugeben;
- eine Messeinrichtung (320, L2, R) zum Bestimmen der Spannungen der Energiezellen (C1, C2), wobei die Messeinrichtung (320, L2, R) dazu eingerichtet ist, die Spannungen der Energiezellen (C1, C2) auf der Basis eines magnetischen Feldes der Induktivität (L1) zu bestimmen;
- eine Ansteuereinrichtung (310) zur Ansteuerung des Gleichstromstellers (330) in die beiden Schaltzustände in Abhängigkeit der bestimmten Spannungen;

**dadurch gekennzeichnet, dass**
die Ansteuereinrichtung (310) dazu eingerichtet ist, eine Spannungsbestimmung einer der Energiezellen (C1, C2) mittels einer kurzen Ansteuerung und eine Energieübertragung mittels einer langen Ansteuerung eines der Schaltzustände zu ermöglichen.

2. Symmetriereinrichtung (300) nach Anspruch 1, wobei die Messeinrichtung (320, L2, R) eine magnetisch mit der Induktivität (L1) gekoppelte Messinduktivität (L2) umfasst.

3. Symmetriereinrichtung (300) nach Anspruch 1 oder 2, wobei eine Vielzahl Energiezellen (C1 - C7) vorgesehen ist, die paarweise als erste (C1) und zweite Energiezellen (C2) mit zugeordneten Gleichstromstellern (330) beschaltet sind, wobei die Induktivitäten (L1) der Gleichstromsteller (330) magnetisch miteinander gekoppelt sind, um eine Energieübertragung zwischen den ersten Energiezellen (C1) und den zweiten Energiezellen (C2) zu ermöglichen.

4. Symmetriereinrichtung (300) nach einem der vorangehenden Ansprüche, wobei eine Vielzahl Energiezellen (C1-C7) in Serie miteinander verbunden sind, jeder Energiezelle (C1-C7) ein Gleichstromsteller (330) zugeordnet ist und zur Bereitstellung von Ansteuerenergie eines der Gleichstromsteller (330) ein Hilfsspeicher vorgesehen ist, der aus den Energiezellen (C1-C7) aufladbar ist.

5. Symmetriereinrichtung (300) nach Anspruch 4, wobei der Hilfsspeicher mittels eines zugeordneten Gleichstromstellers (330) aus einer Serienschaltung mehrerer der Energiezellen (C1-C7) aufladbar ist.

6. Symmetriereinrichtung (300) nach einem der vorangehenden Ansprüche, **dadurch gekennzeichnet, dass** der Gleichstromsteller ein Hochsetzsteller (330) ist und einen gesteuerten Schalter (T) zum selektiven Verbinden der ersten Energiezelle (C1) mit der Induktivität (L1) sowie eine von der Induktivität (L1) und dem Schalter (T) zur zweiten Energiezelle (C2) führende Diode (D) umfasst.

7. Symmetriereinrichtung (300) nach Anspruch 6, **dadurch gekennzeichnet, dass** der Spannungsmesser (320) dazu eingerichtet ist, die Spannung der Energiezelle (C1) zu bestimmen, während der Schalter (T) geschlossen ist, und der Gleichstromsteller (330) dazu eingerichtet ist, die Energie in die zweite Energiezelle (C2) zu transportieren, während der Schalter (T) geöffnet ist.

8. Symmetriereinrichtung (300) nach einem der Ansprüche 1 bis 5, **dadurch gekennzeichnet, dass** der Gleichstromsteller ein Tiefsetzsteller (200) ist und einen gesteuerten Schalter (T) zum selektiven Verbinden der ersten Energiezelle (C1) mit einer Diode (D) sowie eine von der Diode (D) und dem Schalter (T) zur zweiten Energiezelle (C2) führende Induktivität (L1) umfasst.

9. Symmetriereinrichtung (300) nach Anspruch 8, **dadurch gekennzeichnet, dass** der Spannungsmesser (320) dazu eingerichtet ist, die Spannung der Energiezelle (C1) zu bestimmen, während der Schalter (T) geöffnet ist, und der Gleichstromsteller (200) dazu eingerichtet ist, die Energie in die zweite Energiezelle (C2) zu transportieren, während der Schalter (T) geschlossen ist.

10. Energiespeicher (305) umfassend mehrere miteinander in Serie verbundene Energiezellen (C1-C7) und eine Symmetriereinrichtung (300) nach einem der vorangehenden Ansprüche zum Symmetrieren der Energiezellen (C1-C7).

11. Symmetrierverfahren (800) für eine erste (C1) und eine zweite elektrische Energiezelle (C2) mit einem Gleichstromsteller (330) mit einer Induktivität (L1), wobei der Gleichstromsteller (330) dazu eingerichtet ist, in einem ersten Schaltzustand Energie aus der ersten Energiezelle (C1) in die Induktivität (L1) aufzunehmen und in einem zweiten Schaltzustand die aufgenommene Energie aus der Induktivität (L1) an die zweite Energiezelle (C2) abzugeben, wobei das Verfahren folgende Schritte umfasst:

   - kurzes Ansteuern des Gleichstromstellers (330);
   - Bestimmen (810-840) der Spannungen der Energiezellen (C1, C2) auf der Basis eines magnetischen Feldes der Induktivität (L1);
   - langes Ansteuern des Gleichstromstellers (330) in Abhängigkeit der bestimmten Spannungen, um Energie von der ersten Energiezelle (C1) in die zweite Energiezelle (C2) zu transportieren.

12. Symmetrierverfahren (800) nach Anspruch 11, wobei der Gleichstromsteller (330) zum Bestimmen der Spannungen so kurz angesteuert wird, dass die Induktivität zusammen mit einer magnetisch gekoppelten Messinduktivität als Transformator wirkt.

**13.** Symmetrierverfahren (800) nach Anspruch 11 oder 12, wobei der Gleichstromsteller (330) zum Transportieren von Energie so lange angesteuert wird, dass die Energie zeitweise in der Induktivität gespeichert wird.

**14.** Computerprogrammprodukt mit Programmcodemitteln zur Durchführung des Verfahrens (800) nach einem der Ansprüche 11 bis 13, wenn es auf einer Ausführungseinrichtung (310) abläuft oder auf einem computerlesbaren Medium gespeichert ist.

**Claims**

**1.** Balancing unit (300) for a first (C1) and a second electric energy cell (C2), comprising:

- a DC chopper converter (330) with an inductance (L1), wherein the DC chopper converter (330) is designed to receive energy in a first switching state from the first energy cell (C1) into the inductance (L1) and to emit the received energy in a second switching state from the inductance (L1) to the second energy cell (C2);
- a measuring unit (320, L2, R) for determining the voltages of the energy cells (C1, C2), wherein the measuring unit (320, L2, R) is designed to determine the voltages of the energy cells (C1, C2) on the basis of a magnetic field of the inductance (L1);
- an actuating unit (310) for actuating the DC chopper converter (330) into the two switching states as a function of the specific voltages;

**characterised in that**
the actuating unit (310) is designed to enable the determination of a voltage of one of the energy cells (C1, C2) by means of a brief actuation and a transmission of energy by means of a long actuation of one of the switching states.

**2.** Balancing unit (300) according to claim 1, wherein the measuring unit (320, L2, R) comprises a measuring inductance (L2) magnetically coupled to the inductance (L1).

**3.** Balancing unit (300) according to claim 1 or 2, wherein a plurality of energy cells (C1-C7) is provided, which are connected in pairs as first (C1) and second energy cells (C2) with associated DC chopper converters (330), wherein the inductances (L1) of the DC chopper converters (330) are magnetically coupled to each other to allow a transmission of energy between the first energy cells (C1) and the second energy cells (C2).

**4.** Balancing unit (300) according to one of the preceding claims, wherein a plurality of energy cells (C1-C7) are connected to one another in series, a DC chopper converter (330) is associated with each energy cell (C1-C7) and an auxiliary store which can be charged from the energy cells (C1-C7) is provided for providing actuation energy of one of the DC chopper converters (330).

**5.** Balancing unit (300) according to claim 4, wherein the auxiliary store can be charged by means of an associated DC chopper converter (330) from a series circuit of a plurality of the energy cells (C1-C7).

**6.** Balancing unit (300) according to one of the preceding claims, **characterised in that** the DC chopper converter is a step-up converter (330) and comprises a controlled switch (T) for selectively connecting the first energy cell (C1) to the inductance (L1), and a diode (D) leading from the inductance (L1) and the switch (T) to the second energy cell (C2).

**7.** Balancing unit (300) according to claim 6, **characterised in that** the voltmeter (320) is designed to determine the voltage of the energy cell (C1) while the switch (T) is closed, and the DC chopper converter (330) is designed to transport the energy to the second energy cell (C2) while the switch (T) is open.

**8.** Balancing unit (300) according to one of claims 1 to 5, **characterised in that** the DC chopper converter is a voltage reduction unit (200) and comprises a controlled switch (T) for selectively connecting the first energy cell (C1) to a diode (D), and an inductance (L1) leading from the diode (D) and the switch (T) to the second power cell (C2).

**9.** Balancing unit (300) according to claim 8, **characterised in that** the voltmeter (320) is designed to determine the voltage of the energy cell (C1) while the switch (T) is open, and the DC chopper converter (200) is designed to transport the energy to the second energy cell (C2) while the switch (T) is closed.

10. Energy store (305) comprising a plurality of energy cells (C1-C7) connected in series to one another and a balancing unit (300) according to one of the preceding claims for balancing the energy cells (C1-C7).

11. Balancing method (800) for a first (C1) and a second electrical energy cell (C2) having a DC chopper converter (330) with an inductance (L1), wherein the DC chopper converter (330) is designed to receive energy in a first switching state from the first energy cell (C1) into the inductance (L1) and to emit the received energy in a second switching state from the inductance (L1) to the second energy cell (C2), wherein the method comprises the following steps:

- brief actuation of the DC chopper converter (330);
- determination (810-840) of the voltages of the energy cells (C1, C2) on the basis of a magnetic field of the inductance (L1);
- long actuation of the DC chopper converter (330) as a function of the determined voltages, in order to transport energy from the first energy cell (C1) to the second energy cell (C2).

12. Balancing method (800) according to claim 11, wherein the DC chopper converter (330) is actuated for determination of the voltages so briefly that the inductance together with a magnetically coupled measuring inductance acts as a transformer.

13. Balancing method (800) according to claim 11 or 12, wherein for transporting energy the DC chopper converter (330) is actuated for long enough that the energy is temporarily stored in the inductance.

14. Computer program product with program code means for performing the method (800) according to one of claims 11 to 13 when it is run on an execution unit (310) or stored on a computer-readable medium.

## Revendications

1. Dispositif (300) de symétrisation d'une première cellule (C1) d'énergie électrique et d'une deuxième cellule (C2) d'énergie électrique, comprenant :

- un régulateur (330) de courant continu, ayant une inductance (L1), le régulateur (330) de courant continu étant conçu pour absorber, dans un premier état de commutation, de l'énergie de la première cellule (C1) d'énergie dans l'inductance (L1) et pour céder, dans un deuxième état de commutation, l'énergie absorbée de l'inductance (L1) à la deuxième cellule (C2) d'énergie;
- un dispositif (320, L2, R) de mesure pour déterminer les tensions des cellules (C1, C2) d'énergie, le dispositif (320, L2, R) de mesure étant conçu pour déterminer les tensions des cellules (C1, C2) d'énergie sur la base d'un champ magnétique de l'inductance (L1);
- un dispositif (310) d'excitation pour exciter le régulateur (330) de courant continu dans les deux états de commutation, en fonction des tensions déterminées;

**caractérisé en ce que**
le dispositif (310) d'excitation est conçu pour permettre une détermination de tension de l'une des cellules (C1, C2) d'énergie au moyen d'une excitation courte et une transmission d'énergie au moyen d'une excitation longue de l'un des états de commutation.

2. Dispositif (300) de symétrisation suivant la revendication 1, dans lequel le dispositif (320, L2, R) de mesure comprend une inductance (L2) de mesure couplée magnétiquement à l'inductance (L1).

3. Dispositif (300) de symétrisation suivant la revendication 1 ou 2, dans lequel il est prévu une pluralité de cellules (C1 à C7) d'énergie, qui sont montées par paire comme première cellule (C1) d'énergie et deuxième cellule (C2) d'énergie, à régulateurs (330) de courant continu associés, les inductances (L1) des régulateurs (330) de courant continu étant couplées magnétiquement entre elles pour rendre possible une transmission d'énergie entre les premières cellules (C1) d'énergie et les deuxièmes cellules (C2) d'énergie.

4. Dispositif (300) de symétrisation suivant l'une des revendications précédentes dans lequel une pluralité de cellules (C1 à C7) d'énergie sont montées entre elles en série, un régulateur (330) de courant continu étant associé à chaque cellule (C1 à C7) d'énergie et il est prévu, pour mettre à disposition de l'énergie d'excitation de l'un des régulateurs (330) de courant continu, un accumulateur auxiliaire, qui peut être chargé à partir des cellules (C1 à C7) d'énergie.

5. Dispositif (300) de symétrisation suivant la revendication 4, dans lequel l'accumulateur auxiliaire peut être chargé à partir d'un circuit série de plusieurs des cellules (C1 à C7) d'énergie, au moyen d'un régulateur (330) de courant continu associé.

6. Dispositif (300) de symétrisation suivant l'une des revendications précédentes, **caractérisé en ce que** le régulateur de courant continu est un régulateur (330) élévateur et comprend un interrupteur (T) commandé pour relier sélectivement la première cellule (C1) d'énergie à l'inductance (L1) ainsi qu'une diode (D) menant de l'inductance (L1) et de l'interrupteur (T) à la deuxième cellule (C2) d'énergie.

7. Dispositif (300) de symétrisation suivant la revendication 6, **caractérisé en ce que** le voltmètre (320) est conçu pour déterminer la tension de la cellule (C1) d'énergie pendant que l'interrupteur (T) est fermé et le régulateur (330) de courant continu est conçu pour transporter l'énergie à la deuxième cellule (C2) d'énergie pendant que l'interrupteur (T) est ouvert.

8. Dispositif (300) de symétrisation suivant l'une des revendications 1 à 5, **caractérisé en ce que** le régulateur (200) de courant continu est un interrupteur (T) commandé pour relier sélectivement la première cellule (C1) d'énergie à la diode (D) ainsi qu'une diode (D) conduisant de l'inductance (L1) et de l'interrupteur (T) à la deuxième cellule (C2) d'énergie.

9. Dispositif (300) de symétrisation suivant la revendication 8, **caractérisé en ce que** le voltmètre (320) est conçu pour déterminer la tension de la cellule (C1) d'énergie pendant que l'interrupteur (T) est ouvert et le régulateur (200) de courant continu est conçu pour transporter l'énergie à la deuxième cellule (C2) d'énergie pendant que l'interrupteur (T) est fermé.

10. Accumulateur (305) d'énergie, comprenant plusieurs cellules (C1 à C7) d'énergie montées entre elles en série et un dispositif (300) de symétrisation suivant l'une des revendications précédentes pour symétriser les cellules (C1 à C7) d'énergie.

11. Procédé (800) de symétrisation d'une première cellule (C1) d'énergie électrique et d'une deuxième cellule (C2) d'énergie électrique, comprenant un régulateur (330) de courant continu ayant une inductance (L1), le régulateur (330) de courant continu étant conçu pour absorber, dans un premier état de commutation, de l'énergie de la première cellule (C1) d'énergie dans l'inductance (L1) et pour céder, dans un deuxième état de commutation, l'énergie absorbée de l'inductance (L1) à la deuxième cellule (C2) d'énergie, le procédé comprenant les stades suivants :

    - excitation brève du régulateur (330) de courant continu;
    - détermination (810 à 840) des tensions des cellules (C1, C2) d'énergie sur la base d'un champ magnétique de l'inductance (L1);
    - excitation longue du régulateur (330) de courant continu, en fonction des tensions déterminées, pour transporter de l'énergie de la première cellule (C1) d'énergie à la deuxième cellule (C2) d'énergie.

12. Procédé (800) de symétrisation suivant la revendication 11, dans lequel on excite le régulateur (330) de courant continu pour déterminer des tensions, si brièvement que l'inductance agit, ensemble avec une inductance de mesure couplée magnétiquement, comme un transformateur.

13. Procédé (800) de symétrisation suivant la revendication 11 ou 12, dans lequel on excite le régulateur (330) de courant continu pour le transport d'énergie, si longtemps que l'énergie est accumulée, de temps en temps, dans l'inductance.

14. Produit de programme d'ordinateur ayant des moyens de code de programme pour effectuer le procédé (800) suivant l'une des revendications 11 à 13, lorsqu'il se déroule sur un dispositif (310) d'exécution ou lorsqu'il est mémorisé sur un support déchiffrable par ordinateur.

## FIG 1

## FIG 2

FIG 3

FIG 4

TR2

(C3) ← { L1 }

(C2) ← { L1 }

⋮

(C1) ← { L1 }

L2

R

320

→ (310)

FIG 5

TR3

R

320

(C2) ←

(C1) ←

L1

L2

→ (310)

S

FIG 6

EP 2 577 839 B1

## FIG 7

FIG 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2009051414 A2
- DE 102005034588 A1